# EUROPEAN PATENT APPLICATION

(11) **EP 3 203 465 A1**
(43) Date of publication of application: **09.08.2017**
(21) Application number: 14905244.1
(22) Date of filing: 27.10.2014
(51) Int. Cl.: G09G 5/14, G06F 15/16

(54) **IMAGE DISPLAY METHOD, USER TERMINAL AND VIDEO RECEIVING EQUIPMENT**

(71) Applicant: Huawei Technologies Co., Ltd., Longgang District Shenzhen, Guangdong 518129 (CN)
(72) Inventor: QIN, Xiaoqing, Shenzhen Guangdong 518129 (CN)
(74) Representative: Pfenning, Meinig & Partner mbB
(86) International application number: PCT/CN2014/089584
(87) International publication number: WO 2016/065514

(57) **Abstract**

Embodiments of the present invention provide an image display method, a user terminal, and a video receiving device, The method includes: receiving video window description information that is of a mirror video stream and that is sent by a user terminal by using a wireless local area network, where the mirror video stream is a mirror image of an image displayed on a screen of the user terminal, and the video window description information is used to indicate information about a first display window of the mirror video stream; determining, according to the video window description information, a location and a size of the first display window, where the first display window is one of at least two display windows on the screen of the user terminal, the at least two display windows are configured to separately display a corresponding video stream, and the at least two display windows include at least the first display window and a second display window; and displaying the mirror video stream in the first display window, and displaying a video stream from another video source in the second display window, where the another video source is different from the user terminal. In the embodiments of the present invention, a mirroring display service can be flexibly implemented.

## Description

### TECHNICAL FIELD

Embodiments of the present invention relate to the field of image display, and more specifically, to an image display method, a user terminal, and a video receiving device.

### BACKGROUND

With development of a wireless local area network (WLAN, Wireless Local Area Network) technology, a WLAN device may support a mirroring display service. Specifically, an image displayed on a screen of one WLAN device may be displayed on another WLAN device in a mirroring manner.

For example, Miracast is a typical technology that can provide the mirroring display service. A Miracast device provides simplified discovery and settings, so that a user may quickly transfer a video between devices. For example, the user may view a photo taken by a smart phone on a large-screen television, share a laptop screen in real time by using a projector in a meeting room, or watch, on a tablet computer, a live show that is transferred by using a home television set top box.

However, currently, the mirroring display service supports only a full-screen mirroring display mode, that is, an image displayed on a screen of one WLAN device can be displayed on another WLAN device only in a full-screen mirroring display mode. Consequently, the mode cannot flexibly meet a user requirement.

### SUMMARY

Embodiments of the present invention provide an image display method, a user terminal, and a video receiving device, which can flexibly implement a mirroring display service.

According to a first aspect, an image display method is provided, including: receiving video window description information that is of a mirror video stream and that is sent by a user terminal by using a wireless local area network, where the mirror video stream is a mirror image of an image displayed on a screen of the user terminal, and the video window description information is used to indicate information about a first display window of the mirror video stream; determining, according to the video window description information, a location and a size of the first display window, where the first display window is one of at least two display windows on the screen of the user terminal, the at least two display windows are configured to separately display a corresponding video stream, and the at least two display windows include at least the first display window and a second display window; and displaying the mirror video stream in the first display window, and displaying a video stream from another video source in the second display window, where the another video source is different from the user terminal.

With reference to the first aspect, in an implementation manner of the first aspect, before the determining, according to the video window description information, a location and a size of the first display window, the image display method further includes: determining, according to the video window description information, whether the mirror video stream is displayed in full screen, and when it is determined that the mirror video stream is not displayed in full screen, enabling a function of separately displaying the corresponding video stream in the at least two display windows.

With reference to the first aspect and the foregoing implementation manner, in another implementation manner of the first aspect, the video window description information includes at least one of the following parameters: a horizontal offset, a vertical offset, a horizontal size, or a vertical size, where the horizontal offset and the vertical offset are used to indicate a coordinate position of the upper left corner of the first display window, and the horizontal size and the vertical size are used to respectively indicate a horizontal size and a vertical size of the first display window.

With reference to the first aspect and the foregoing implementation manners, in another implementation manner of the first aspect, the receiving video window description information that is of a mirror video stream and that is sent by a user terminal by using a wireless local area network includes: receiving the mirror video stream that is sent by the user terminal by using the wireless local area network, where the mirror video stream carries the video window description information; or receiving a control instruction that is corresponding to the mirror video stream and that is sent by the user terminal by using the wireless local area network, where the control instruction carries the video window description information.

According to a second aspect, an image display method is provided, where the method includes: generating video window description information of a mirror video stream, where the mirror video stream is a mirror image of an image displayed on a screen of a user terminal, and the video window description information is used to indicate information about a first display window of the mirror video stream; and sending, by using a wireless local area network, the video window description information to a video receiving device, so that the video receiving device determines, according to the video window description information, a location and a size of the first display window, where the first display window is one of at least two display windows on the screen of the user terminal, and the at least two display windows are configured to separately display a corresponding video stream.

With reference to the second aspect, in an implementation manner of the second aspect, the video window description information includes at least one of the following parameters: a horizontal offset, a vertical offset, a horizontal size, or a vertical size, where the horizontal offset and the vertical offset are used to indicate a coordinate position of the upper left corner of the first display window, and the horizontal size and the vertical size are separately used to indicate a horizontal size and a vertical size of the first display window.

With reference to the second aspect and the foregoing implementation manner, in another implementation manner of the second aspect, the sending, by using a wireless local area network, the video window description information to a video receiving device includes: sending, by using the wireless local area network, the mirror video stream to the video receiving device, where the mirror video stream carries the video window description information; or sending, by using the wireless local area network, a control instruction corresponding to the mirror video stream to the video receiving device, where the control instruction carries the video window description information.

With reference to the second aspect and the foregoing implementation manners, in another implementation manner of the second aspect, the generating video window description information of a mirror video stream includes: receiving, from a user, operation input of the image displayed on the screen of the user terminal; and generating the video window description information according to the operation input.

According to a third aspect, a video receiving device is provided, including: a first receive port, configured to receive video window description information that is of a mirror video stream and that is sent by a user terminal by using a wireless local area network, where the mirror video stream is a mirror image of an image displayed on a screen of the user terminal, and the video window description information is used to indicate information about a first display window of the mirror video stream; a second receive port, configured to receive a video stream from another video source, where the another video source is different from the user terminal; and a display controller, configured to determine, according to the video window description information, a location and a size of the first display window, where the first display window is one of at least two display windows on the screen of the user terminal, the at least two display windows are configured to separately display a corresponding video stream, and the at least two display windows include at least the first display window and a second display window; where the display controller is further configured to control the first display window to display the mirror video stream, and control the second display window to display the video stream from the another video source.

With reference to the third aspect, in an implementation manner of the third aspect, the display controller is further configured to: before determining, according to the video window description information, a location and a size of the first display window, determine, according to the video window description information, whether the mirror video stream is displayed in full screen; and when determining that the mirror video stream is not displayed in full screen, enable a function of separately displaying the corresponding video stream in the at least two display windows.

With reference to the third aspect and the foregoing implementation manner, in another implementation manner of the third aspect, the video window description information includes at least one of the following parameters: a horizontal offset, a vertical offset, a horizontal size, or a vertical size, where the horizontal offset and the vertical offset are used to indicate a coordinate position of the upper left corner of the first display window, and the horizontal size and the vertical size are used to respectively indicate a horizontal size and a vertical size of the first display window.

With reference to the third aspect and the foregoing implementation manners, in another implementation manner of the third aspect, the first receive port is specifically configured to receive the mirror video stream that is sent by the user terminal, where the mirror video stream carries the video window description information; or the first receive port is specifically configured to receive a control instruction that is corresponding to the mirror video stream and that is sent by the user terminal, where the control instruction carries the video window description information.

According to a fourth aspect, a user terminal is provided, including: a controller, configured to generate video window description information of a mirror video stream, where the mirror video stream is a mirror image of an image displayed on a screen of a user terminal, and the video window description information is used to indicate information about a first display window of the mirror video stream; and a transmitter, configured to send the video window description information to a video receiving device by using a wireless local area network, so that the video receiving device determines, according to the video window description information, a location and a size of the first display window, where the first display window is one of at least two display windows on the screen of the user terminal, and the at least two display windows are configured to separately display a corresponding video stream.

With reference to the fourth aspect, in an implementation manner of the fourth aspect, the video window description information includes at least one of the following parameters: a horizontal offset, a vertical offset, a horizontal size, or a vertical size, where the horizontal offset and the vertical offset are used to indicate a coordinate position of the upper left corner of the first display window, and the horizontal size and the vertical size are separately used to indicate a horizontal size and a vertical size of the first display window.

With reference to the fourth aspect and the foregoing implementation manners, in another implementation manner of the fourth aspect, the transmitter is specifically configured to send the mirror video stream to the video receiving device, where the mirror video stream carries the video window description information; or the transmitter is specifically configured to send a control instruction corresponding to the mirror video stream to the video receiving device, where the control instruction carries the video window description information.

With reference to the fourth aspect and the foregoing implementation manners, in another implementation manner of the fourth aspect, the user terminal further includes an input device, configured to receive, from a user, operation input of the image displayed on the screen of the user terminal; and the controller is specifically configured to generate the video window description information according to the operation input.

In this embodiments of the present invention, a multi-window display technology and a mirroring display technology are combined, and a location and a size of a display window of a mirror video stream are determined according to video window description information of the mirror video stream, and the mirror video stream and a video stream from another video source are separately displayed on different display windows. Therefore, a mirroring display service can be flexibly implemented.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an exemplary system scenario in which an embodiment of the present invention may be applied;
FIG. 2 is a flowchart of an image display method according to an embodiment of the present invention;
FIG. 3 is a flowchart of an image display method according to another embodiment of the present invention;
FIG. 4 is a schematic flowchart of a mirroring display service according to an embodiment of the present invention;
FIG. 5 is a schematic flowchart of a mirroring display service according to an embodiment of the present invention;
FIG. 6 is a block diagram of a video receiving device according to an embodiment of the present invention; and
FIG. 7 is a block diagram of a user terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

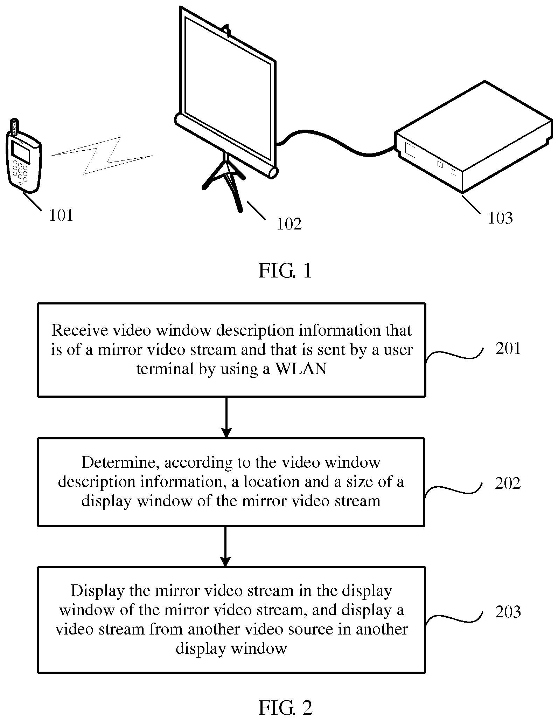

FIG. 1 is a schematic diagram of an exemplary system scenario in which an embodiment of the present invention may be applied.

As shown in FIG. 1, a user terminal 101 is connected to a video receiving device 102 by using a WLAN. The user terminal 101 may generate a mirror video stream according to an image displayed on a screen of the user terminal 101, and then send, by using the WLAN, the mirror video stream to the video receiving device 102.

The user terminal 101 may be referred to as user equipment (UE, User Equipment), or may be referred to as a mobile terminal (Mobile Terminal), mobile user equipment, or the like, for example, a mobile phone or a computer with a mobile terminal, such as a portable, a pocket-sized, a handheld, or an in-vehicle mobile apparatus, or a mobile apparatus built in a computer. The user terminal 101 may also be a stationary device, such as a personal computer, a desktop computer, or a server device. The user terminal 101 supports a WLAN technology, for example, supports a wireless fidelity (Wi-Fi, Wireless Fidelity) protocol or another similar protocol, and the user terminal 101 has a corresponding WLAN transmit port.

The video receiving device 102 may be a device that is configured to receive and process a video stream, such as a display, a television, a set top box, a wireless router, or a wireless forwarder. The video receiving device 102 supports the WLAN technology, for example, supports the wireless fidelity (Wi-Fi, Wireless Fidelity) protocol or the another similar protocol, and the video receiving device 102 has a corresponding WLAN receive port. The video receiving device 102 may further support another video transmission technology, for example, may support a cable television (cable) technology, an Ethernet technology, a Bluetooth technology, or an infrared technology, and the video receiving device 102 receives another video stream from another video source 103.

The video receiving device 102 supports a multi-window display function. The multi-window display function is used to separately display a corresponding video stream in at least two display windows. The display windows may partially or completely overlap each other, or may be completely non-overlapping. A typical multi-window display function is a picture in picture (PIP, Picture in picture) function. The PIP function is used to separately display a corresponding video stream in at least two pictures that include a primary picture and a secondary picture. Generally, the picture in picture function supports one primary picture and one or more secondary pictures, where the primary picture is displayed in full screen, and the secondary picture is less than the primary picture and overlaps with the primary picture for displaying. Therefore, a user may display multiple programs on one screen, that is, insert one or more compressed secondary pictures into a primary picture that is normally watched, so as to monitor another channel while enjoying the primary picture.

However, this embodiment of the present invention imposes no limitation on a location relationship or a size relationship between the display windows. For example, in this embodiment of the present invention, the multi-window display function also supports a "two-window" or a "multi-window" display mode; for example, two display windows are basically of a same size, and their locations on a screen do not overlap each other.

FIG. 2 is a flowchart of an image display method according to an embodiment of the present invention. The method in FIG. 2 is executed by a video receiving device (for example, the video receiving device 102 in FIG. 1).
201. Receive video window description information that is of a mirror video stream and that is sent by a user terminal (for example, the user terminal 101 in FIG. 1) by using a WLAN, where the mirror video stream is a mirror image of an image displayed on a screen of the user terminal, and the video window description information is used to indicate information about a first display window of the mirror video stream.
202. Determine, according to the video window description information, a location and a size of the first display window, where the first display window is one of at least two display windows on the screen of the user terminal, the at least two display windows are configured to separately display a corresponding video stream, and the at least two display windows include at least the first display window and a second display window.
203. Display the mirror video stream in the first display window, and display a video stream from another video source in the second display window, where the another video source is different from the foregoing user terminal.

In this embodiment of the present invention, a multi-window display technology and a mirroring display technology are combined, and a location and a size of a display window of a mirror video stream are determined according to video window description information of the mirror video stream, and the mirror video stream and a video stream from another video source are separately displayed on different display windows. Therefore, a mirroring display service can be flexibly implemented.

That is, in this embodiment of the present invention, the mirror video stream may be used as one video source for a multi-window display service, so as to implement a new multi-window display service.

In addition, in a conventional picture in picture function, a relative relationship (such as a location relationship and a size relationship) between a primary picture and a secondary picture is fixed and cannot be controlled by an external device. When the secondary picture is used as the display window of the mirror video stream, the user terminal in this embodiment of the present invention can control a location and a size of the secondary picture according to the video window description information, thereby enriching performance of a mirroring video service and enhancing user experience.

Optionally, as an embodiment, the user terminal is connected to the video receiving device by using the WLAN, that is, the video receiving device may receive, by using the WLAN, the mirror video stream and the video window description information from user equipment. However, this embodiment of the present invention imposes no limitation on a form of the foregoing another video source, for example, the another video source may be a cable television (cable), a satellite, a broadcast television, a WLAN, Bluetooth, or infrared.

Optionally, as another embodiment, the video window description information may be a part of the mirror video stream, or may be separate from the mirror video stream and independently transmitted. Specifically, in step 201, the video receiving device may receive the mirror video stream that is sent by the user terminal, where the mirror video stream carries the video window description information. Alternatively, the video receiving device may receive a control instruction that is corresponding to the mirror video stream and that is sent by the user terminal, where the control instruction carries the video window description information.

Optionally, as another embodiment, the video window description information may include at least one of the following parameters: a horizontal offset (horizontal offset), a vertical offset (vertical offset), a horizontal size (horizontal size), or a vertical size (vertical size). The horizontal offset and the vertical offset are used to indicate a coordinate position that is on the screen and that is of the upper left corner of the display window of the mirror video stream, and the horizontal size and the vertical size are used to respectively indicate a horizontal size and a vertical size of the display window of the mirror video stream.

However, this embodiment of the present invention imposes no limitation on specific content of the video window description information. For example, the horizontal offset and the vertical offset may also be used to indicate a coordinate position that is on the screen and that is of another reference point (such as the upper right corner, the lower left corner, the lower right corner, or the central point) of the display window of the mirror video stream. For another example, the horizontal offset may be a distance relative to the left edge of the screen, or may be a distance relative to the right edge of the screen; the vertical offset may be a distance relative to the upper edge of the screen, or may be a distance relative to the lower edge of the screen. For another example, the horizontal size may be indicated as a length value, a quantity of pixels, or a percentage relative to the horizontal size of the screen (or a horizontal size of another display window, for example, a horizontal size of the foregoing first display window); the vertical size may be indicated as a length value, a quantity of pixels, or a percentage relative to a screen vertical size (or a horizontal size of another display window, for example, a vertical size of the foregoing first display window).

The video window description information does not necessarily include all the four of horizontal offset, vertical offset, horizontal size, and vertical size. For example, the video window description information may include only the horizontal offset and the vertical offset. In this case, the size of the display window of the mirror video stream may be a default value or a fixed value. For another example, when a user adjusts, by using a user terminal, only a location of a mirror image (for example, the user touches and holds a screen of the user terminal with a finger and then simply drags within a scope of a display window of a mirror video stream to adjust the location of the mirror image), video window description information may include only a horizontal offset and a vertical offset, but not include a horizontal size or a vertical size. Therefore, when adjusting the display window of the mirror video stream, a video receiving device adjusts only a location of the display window without changing a size of the display window. For another example, when a user adjusts, by using a user terminal, only a size of a mirror image (for example, the user pinches and stretches the image with two fingers within a scope of a display window of a mirror video stream to adjust the size of the mirror image), video window description information may include only a horizontal size and a vertical size, but not include a horizontal offset or a vertical offset. Therefore, when adjusting a secondary picture, a video receiving device adjusts only a size of the display window of the mirror video stream and keeps a location of the display window of the mirror video stream unchanged, for example, keeps the central point (or another reference point) of the display window of the mirror video stream unchanged.

Optionally, as another embodiment, the video window description information may include another parameter, such as a layer parameter, an angle-of-rotation parameter, an aspect ratio parameter, a transparency parameter, a contrast ratio parameter, a luminance parameter, a frame frequency parameter, or a scanning mode. A case in which the secondary picture in the picture in picture function is used as the display window of the mirror video stream is used as an example. For example, when there are multiple secondary pictures and the multiple secondary pictures may overlap each other, a layer parameter of a specific secondary picture is used to indicate that the specific secondary picture may be overlapped by another secondary picture or may overlap another secondary picture. An angle-of-rotation parameter of the secondary picture may indicate an angle-of-rotation relationship between the image displayed on the screen of the user terminal and the mirror image displayed in the secondary picture, for example, the image displayed on the user terminal may have a 90-degree angle-of-rotation relative to the mirror image; or the user may adjust an angle-of-rotation of the mirror image by rotating the user equipment. The aspect ratio parameter, the transparency parameter, the contrast ratio parameter, and the luminance parameter respectively indicate an aspect ratio, a transparency, a contrast ratio, and a luminance of the secondary picture.

As a specific implementation manner, the video window description information may use a video window descriptor (Video Window Descriptor) in a Miracast protocol. An example of the video window descriptor may include: an 8-bit descriptor_tag, used to identify the video window descriptor; an 8-bit descriptor_length, used to indicate a length of the video window descriptor; a 14-bit horizontal_offset, used to indicate a horizontal offset of the upper left corner of the mirror image; a 14-bit vertical_offset, used to indicate a vertical offset of the upper left corner of the mirror image; and a 4-bit window_priority, used to indicate a layer priority of the mirror image, where a highest priority indicates always being placed on the top layer. Another example of the video window descriptor may further include the horizontal size and the vertical size (for example, in a form of resolution like 640x480 or 1280×720); alternatively or additionally, another example of the video window descriptor may further include another parameter, such as the aspect ratio, the frame frequency, or the scanning mode (for example, an i indicates interlaced scanning, and a p indicates progressive scanning). The foregoing parameters are merely exemplary rather than restrictive. In this embodiment of the present invention, the video window description information may be an existing video window descriptor in the Miracast protocol, or may be obtained by extending an existing video window descriptor. A person skilled in the art may readily design an appropriate parameter form according to a requirement and all variations shall fall within the protection scope of the present invention.

Optionally, as another embodiment, before step 202, the video receiving device may further determine, according to the video window description information, whether the mirror video stream is displayed in full screen; when determining that the mirror video stream is not displayed in full screen, enable a function of separately displaying the corresponding video stream in the at least two display windows, for example, enable the picture in picture function. For example, when the video window description information indicates that the upper left corner of the display window of the mirror video stream is not located on the upper left corner of a display screen of the mirror video stream (for example, the foregoing horizontal offset or the vertical offset is not 0), it can be determined that the mirror video stream is not displayed in full screen.

Alternatively, when the video window description information indicates that the size of the display window of the mirror video stream is less than a size of the screen (for example, a horizontal size included in the video window description information is less than a horizontal size of a terminal screen), it can be determined that the mirror video stream is not displayed in full screen. This embodiment of the present invention imposes no limitation on a specific standard for determining that the mirror video stream is not displayed in full screen, and the specific standard may be designed according to a parameter included in the video window description information. For example, when an aspect ratio included in the video window description information is inconsistent with an aspect ratio of the terminal screen, it can be determined that the mirror video stream is not displayed in full screen. For another example, the video window description information may include a special parameter (for example, a particular bit "1" or "0") to indicate whether the mirror video stream is displayed in full screen.

Optionally, when it is determined that the mirror video stream is displayed in full screen, the multi-window display function (for example, the picture in picture function) may be disabled or exited, and only the mirror video stream is displayed.

Therefore, in this embodiment of the present invention, a mirroring display service can be flexibly implemented, and user experience is enhanced.

In addition, after the mirroring display service is enabled, image displaying on the screen of the user terminal may be stopped, so as to achieve an effect of power saving. Certainly, the screen of the user terminal may also continue displaying an image the same as the mirror video stream or display another image, such as a message "a mirroring display service has been enabled" for reminding the user, or a control menu, or auxiliary information of another type, which also helps enhance user experience.

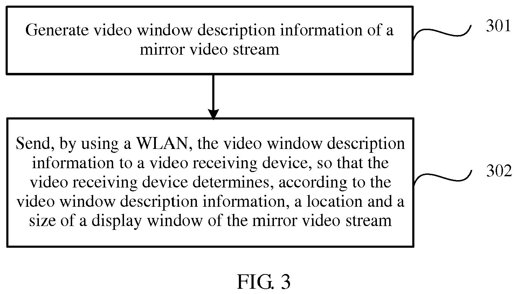

FIG. 3 is a flowchart of an image display method according to another embodiment of the present invention. The method in FIG. 3 is executed by a user terminal (for example, the user terminal 101 in FIG. 1).

301. Generate video window description information of a mirror video stream, where the mirror video stream is a mirror image of an image displayed on a screen of the user terminal, and the video window description information is used to indicate information about a first display window of the mirror video stream.

302. Send, by using a WLAN, the video window description information to a video receiving device, so that the video receiving device determines, according to the video window description information, a location and a size of the first display window, where the first display window is one of at least two display windows on the screen of the user terminal, and the at least two display windows are configured to separately display a corresponding video stream.

In this embodiment of the present invention, a multi-window display technology and a mirroring display technology are combined, and a location and a size of a display window of a mirror video stream are determined according to video window description information of the mirror video stream, and the mirror video stream and a video stream from another video source are separately displayed on different display windows. Therefore, a mirroring display service can be flexibly implemented.

That is, in this embodiment of the present invention, the mirror video stream may be used as one video source for a multi-window display service, so as to implement a new multi-window display service.

In addition, in a conventional picture in picture function, a relative relationship (such as a location relationship and a size relationship) between a primary picture and a secondary picture is fixed and cannot be controlled by an external device. When the secondary picture is used as the display window of the mirror video stream, the user terminal in this embodiment of the present invention can control a location and a size of the secondary picture according to the video window description information, thereby enriching performance of a mirroring video service and enhancing user experience.

Optionally, as an embodiment, the video window description information includes at least one of the following parameters: a horizontal offset, a vertical offset, a horizontal size, or a vertical size, where the horizontal offset and the vertical offset are used to indicate a coordinate position that is on the screen and that is of the upper left corner of the display window of the mirror video stream, and the horizontal size and the vertical size are used to respectively indicate a horizontal size and a vertical size of the display window of the mirror video stream.

However, this embodiment of the present invention imposes no limitation on specific content of the video window description information. For example, the horizontal offset and the vertical offset may also be used to indicate a coordinate position that is on the screen and that is of another reference point (such as the upper right corner, the lower left corner, the lower right corner, or the central point) of the display window of the mirror video stream. For another example, the horizontal offset may be a distance relative to the left edge of the screen, or may be a distance relative to the right edge of the screen; the vertical offset may be a distance relative to the upper edge of the screen, or may be a distance relative to the lower edge of the screen. For another example, the horizontal size may be indicated as a length value, a quantity of pixels, or a percentage relative to the horizontal size of the screen (or a horizontal size of another display window, for example, a horizontal size of the foregoing first display window); the vertical size may be indicated as a length value, a quantity of pixels, or a percentage relative to a screen vertical size (or a horizontal size of another display window, for example, a vertical size of the foregoing first display window).

It should be noted that, in this embodiment of the present invention, the terms indicating a direction like the "horizontal" and the "vertical" are relative to the screen, or relative to a coordinate system in which the screen is located, rather than relative to another reference object like the ground. Generally, the upper left corner within a displayable area of the screen is used as the origin of coordinates of the foregoing coordinate system, a horizontal direction is used as the x-axis, and a vertical direction is used as the y-axis. However, this embodiment of the present invention imposes no limitation on a specific form of the coordinate system.

The video window description information does not necessarily include all the four of horizontal offset, vertical offset, horizontal size, and vertical size. For example, the video window description information may include only the horizontal offset and the vertical offset. In this case, the size of the display window of the mirror video stream may be a default value or a fixed value. For another example, when a user adjusts, by using a user terminal, only a location of a mirror image (for example, the user touches and holds a screen of the user terminal with a finger and then simply drags within a scope of a display window of a mirror video stream to adjust the location of the mirror image), video window description information may include only a horizontal offset and a vertical offset, but not include a horizontal size or a vertical size. Therefore, when adjusting the display window of the mirror video stream, a video receiving device adjusts only a location of the display window without changing a size of the display window. For another example, when a user adjusts, by using a user terminal, only a size of a mirror image (for example, the user pinches and stretches the image with two fingers within a scope of a display window of a mirror video stream to adjust the size of the mirror image), video window description information may include only a horizontal size and a vertical size, but not include a horizontal offset or a vertical offset. Therefore, when adjusting a secondary picture, a video receiving device adjusts only a size of the display window of the mirror video stream and keeps a location of the display window of the mirror video stream unchanged, for example, keeps the central point (or another reference point) of the display window of the mirror video stream unchanged.

Optionally, as another embodiment, the video window description information may include another parameter, such as a layer parameter, an angle-of-rotation parameter, an aspect ratio parameter, a transparency parameter, a contrast ratio parameter, or a luminance parameter. A case in which the secondary picture in the picture in picture function is used as the display window of the mirror video stream is used as an example. For example, when there are multiple secondary pictures and the multiple secondary pictures may overlap each other, a layer parameter of a specific secondary picture is used to indicate that the specific secondary picture may be overlapped by another secondary picture or may overlap another secondary picture. An angle-of-rotation parameter of the secondary picture may indicate an angle-of-rotation relationship between the image displayed on the screen of the user terminal and the mirror image displayed in the secondary picture, for example, the image displayed on the user terminal may have a 90-degree angle-of-rotation relative to the mirror image; or the user may adjust an angle-of-rotation of the mirror image by rotating the user equipment. The aspect ratio parameter, the transparency parameter, the contrast ratio parameter, and the luminance parameter respectively indicate an aspect ratio, a transparency, a contrast ratio, and a luminance of the secondary picture.

As a specific implementation manner, the video window description information may use a video window descriptor (Video Window Descriptor) in a Miracast protocol. An example of the video window descriptor may include: an 8-bit descriptor_tag, used to identify the video window descriptor; an 8-bit descriptor_length, used to indicate a length of the video window descriptor; a 14-bit horizontal_offset, used to indicate a horizontal offset of the upper left corner of the mirror image; a 14-bit vertical_offset, used to indicate a vertical offset of the upper left corner of the mirror image; and a 4-bit window_priority, used to indicate a layer priority of the mirror image, where a highest priority indicates always being placed on the top layer. Another example of the video window descriptor may further include the horizontal size and the vertical size (for example, in a form of resolution like 640x480 or 1280×720); alternatively or additionally, another example of the video window descriptor may further include another parameter, such as the aspect ratio, the frame frequency, or the scanning mode (for example, an i indicates interlaced scanning, and a p indicates progressive scanning). The foregoing parameters are merely exemplary rather than restrictive. In this embodiment of the present invention, the video window description information may be an existing video window descriptor in the Miracast protocol, or may be obtained by extending an existing video window descriptor. A person skilled in the art may readily design an appropriate parameter form according to a requirement and all variations shall fall within the protection scope of the present invention.

Optionally, as another embodiment, the video window description information may be a part of the mirror video stream, or may be separate from the mirror video stream and independently transmitted. Specifically, in step 302, the user terminal may send the mirror video stream to the video receiving device, where the mirror video stream carries the video window description information; or the user terminal may send a control instruction corresponding to the mirror video stream to the video receiving device, where the control instruction carries the video window description information.

Optionally, as another embodiment, the user terminal is connected to the video receiving device by using the WLAN, that is, the video receiving device may receive the mirror video stream and the video window description information from the user equipment by using the WLAN.

Optionally, as another embodiment, in step 301, the user terminal may receive operation input of an image displayed on the screen from the user of the user terminal, and generate the video window description information according to the operation input. This embodiment of the present invention imposes no limitation on a form of the operation input from the user. For example, the user may perform touch input, for example, a dragging operation from the user indicates adjusting the location of the display window of the mirror video stream, a pinching and stretching operation from the user indicates adjusting the size of the display window of the mirror video stream, and a tapping operation from the user indicates enabling or disabling a multi-window display function. For another example, the user may perform a menu input operation, and the user terminal presents, to the user, a multi-level menu, which is provided for the user to adjust the location, the size, or another display parameter of the secondary picture.

In addition, after the mirroring display service is enabled, image displaying on the screen of the user terminal may be stopped, so as to achieve an effect of power saving. Certainly, the screen of the user terminal may also continue displaying an image the same as the mirror video stream or display another image, such as a message "a mirroring display service has been enabled" for reminding the user, or a control menu, or auxiliary information of another type, which also helps enhance user experience.

The operation input from the user may be executed before the mirroring display service is enabled or in an initialization process of the mirroring display service, or may also be executed after the mirroring display service is enabled. The following describes specific embodiments of the present invention in more detail with reference to specific examples.

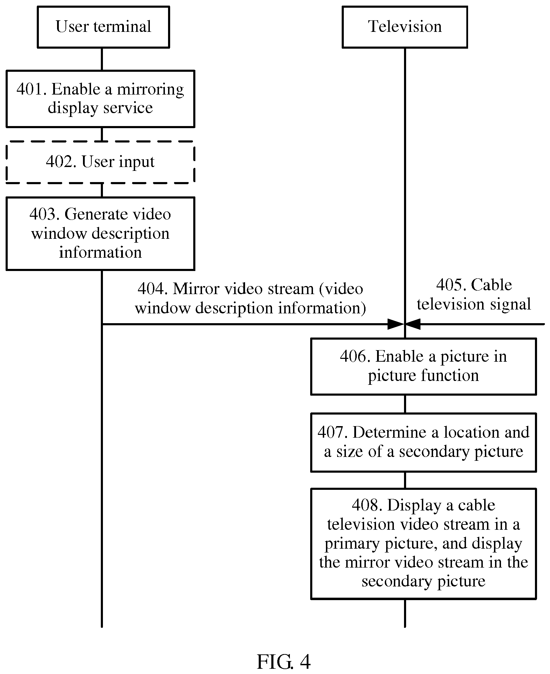

FIG. 4 is a schematic flowchart of a mirroring display service according to an embodiment of the present invention. In the embodiment shown in FIG. 4, a video receiving device is a television, and a multi-window display service is a picture in picture service. The picture in picture service includes a primary picture and a secondary picture, where a video source of the primary picture is a cable television signal, and a video source of the secondary picture is a mirror video stream of a user terminal.
401. A mirroring display service of a user terminal is enabled.
   For example, a user may tap a particular application (App) on the user terminal to enable the mirroring display service.
402. The user terminal receives operation input from a user.
   For example, the user may specify or change a location and a size of a secondary picture by using touch input or menu input. Step 402 is an optional step; for example, an initial location and an initial size of the secondary picture may be default values, or may be values that are set when the mirroring display service is executed last time.
403. The user terminal generates corresponding video window description information according to the operation input from the user (if step 402 is executed) or according to a set value (if step 402 is not executed).
404. The user terminal sends a mirror video stream and the video window description information to a television by using a WLAN.
405. The television receives a cable television signal.
406. The television determines, according to the video window description information, that the mirror video stream is not displayed in full screen, and a picture in picture function is enabled.
407. The television determines a location and a size of a secondary picture according to the video window description information.
408. The television displays a cable television video stream in a primary picture, and displays the mirror video stream of the user terminal in the secondary picture.

Therefore, in this embodiment of the present invention, a mirroring display service can be flexibly implemented, and user experience is enhanced.

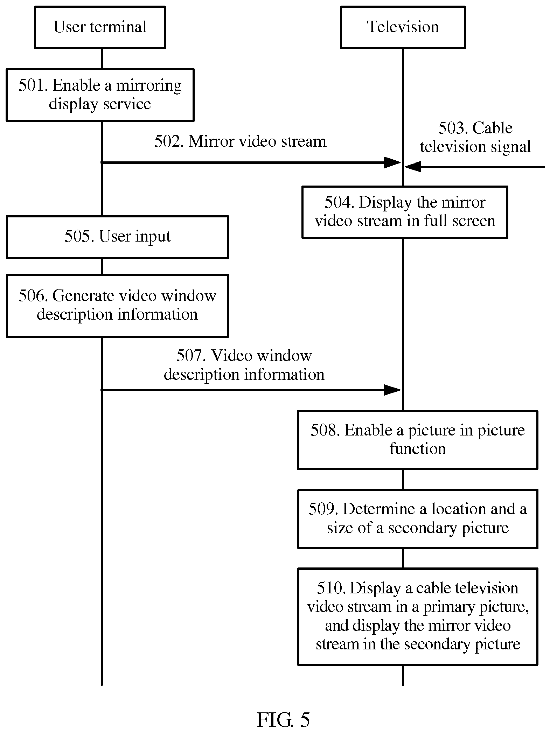

FIG. 5 is a schematic flowchart of a mirroring display service according to an embodiment of the present invention. In the embodiment shown in FIG. 5, a video receiving device is a television, and a multi-window display service is a picture in picture service. The picture in picture service includes a primary picture and a secondary picture, where a video source of the primary picture is a cable television signal, and a video source of the secondary picture is a mirror video stream of a user terminal.
501. A mirroring display service of a user terminal is enabled.
   For example, a user may tap a particular application (App) on the user terminal to enable the mirroring display service.
502. The user terminal sends a mirror video stream to a television by using a WLAN.
503. The television receives a cable television signal.
504. The television displays the mirror video stream in full screen, but does not display a cable television video stream.
505. The user terminal receives operation input from a user.
   For example, the user may determine, by using touch input or menu input, not to display the mirror video stream in full screen, and specify or change a location and a size of a secondary picture.
506. The user terminal generates corresponding video window description information according to the operation input from the user.
507. The user terminal sends the video window description information to the television by using the WLAN.
508. The television determines, according to the video window description information, that the mirror video stream is not displayed in full screen, and enables a picture in picture function.
509. The television determines a location and a size of a secondary picture according to the video window description information.
510. The television displays a cable television video stream in a primary picture, and displays the mirror video stream of the user terminal in the secondary picture.

Therefore, in this embodiment of the present invention, a mirroring display service can be flexibly implemented, and user experience is enhanced.

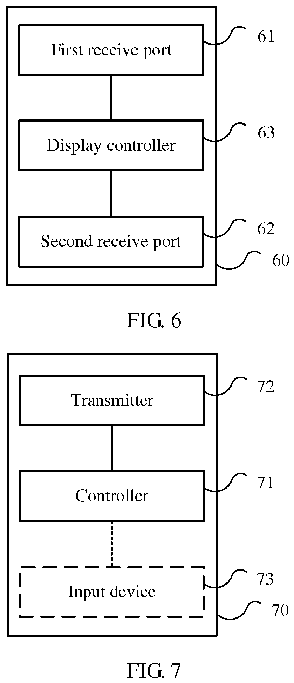

FIG. 6 is a block diagram of a video receiving device according to an embodiment of the present invention. An example of a video receiving device 60 in FIG. 6 is the video receiving device 102 in FIG. 1. As shown in FIG. 6, the video receiving device 60 includes a first receive port 61, a second receive port 62, and a display controller 63.

The first receive port 61 is configured to receive video window description information that is of a mirror video stream and that is sent by a user terminal by using a WLAN. The mirror video stream is a mirror image of an image displayed on a screen of the user terminal, and the video window description information is used to indicate information about a first display window of the mirror video stream.

The second receive port 62 is configured to receive a video stream from another video source, where the another video source is different from the user terminal.

The display controller 63 is configured to determine, according to the video window description information, a location and a size of the first display window, where the first display window is one of at least two display windows on the screen of the user terminal, the at least two display windows are configured to separately display a corresponding video stream, and the at least two display windows include at least the first display window and a second display window.

The display controller 63 is further configured to control the first display window to display the mirror video stream, and control the second display window to display the video stream from the another video source.

In this embodiment of the present invention, a multi-window display technology and a mirroring display technology are combined, and a location and a size of a display window of a mirror video stream are determined according to video window description information of the mirror video stream, and the mirror video stream and a video stream from another video source are separately displayed on different display windows. Therefore, a mirroring display service can be flexibly implemented.

That is, in this embodiment of the present invention, the mirror video stream may be used as one video source for a multi-window display service, so as to implement a new multi-window display service.

In addition, in a conventional picture in picture function, a relative relationship (such as a location relationship and a size relationship) between a primary picture and a secondary picture is fixed and cannot be controlled by an external device. When the secondary picture is used as the display window of the mirror video stream, the user terminal in this embodiment of the present invention can control a location and a size of the secondary picture according to the video window description information, thereby enriching performance of a mirroring video service and enhancing user experience.

The video receiving device 60 in FIG. 6 may implement various operations or functions related to the video receiving device in the embodiments shown in FIG. 1 to FIG. 5, and to avoid repetition, details are not described herein.

Optionally, as an embodiment, the first receive port 61 may be a WLAN port, for example, a wireless receiver that supports a Wi-Fi protocol. The first receive port 61 transmits wireless data/signaling by using a WLAN that is established between the first receive port 61 and the user terminal; for example, the first receive port 61 receives the mirror video stream and the video window description information from the user terminal.

The second receive port 62 may be a video transmission port of another type, for example, may be a wired cable television port or Ethernet port, or may be a wireless Bluetooth port or a wireless infrared port. The second receive port 62 receives a video stream from another video source.

The display controller 63 may be implemented by a processor or a processing chip, such as a central processing unit (CPU, Central Processing Unit) or a graphic processing unit (GPU, Graphic Processing Unit). The video streams that are received by the first receive port 61 and the second receive port 62 are used as multiple inputs of a multi-window display function, so as to control different display windows to display different video streams.

The video receiving device 60 may include a display, where the display controller 63 controls the display to display an image.

Alternatively, the video receiving device 60 may not include a display, and be connected to an external display by a cable or in wireless mode. In this case, the display controller 63 may send a control instruction to the external display, so that the external display displays multiple display windows; or the display controller 63 may perform image processing, generate a corresponding video stream of a whole picture that includes multiple display windows, and send the generated video stream to the external display for displaying.

Optionally, as an embodiment, the video window description information includes at least one of the following parameters: a horizontal offset, a vertical offset, a horizontal size, or a vertical size, where the horizontal offset and the vertical offset are used to indicate a coordinate position that is on the screen and that is of the upper left corner of the display window of the mirror video stream, and the horizontal size and the vertical size are used to respectively indicate a horizontal size and a vertical size of the display window of the mirror video stream.

However, this embodiment of the present invention imposes no limitation on specific content of the video window description information. For example, the horizontal offset and the vertical offset may also be used to indicate a coordinate position that is on the screen and that is of another reference point (such as the upper right corner, the lower left corner, the lower right corner, or the central point) of the display window of the mirror video stream. For another example, the horizontal offset may be a distance relative to the left edge of the screen, or may be a distance relative to the right edge of the screen; the vertical offset may be a distance relative to the upper edge of the screen, or may be a distance relative to the lower edge of the screen. For another example, the horizontal size may be indicated as a length value, a quantity of pixels, or a percentage relative to the horizontal size of the screen (or a horizontal size of another display window, for example, a horizontal size of the foregoing first display window); the vertical size may be indicated as a length value, a quantity of pixels, or a percentage relative to a screen vertical size (or a horizontal size of another display window, for example, a vertical size of the foregoing first display window).

The video window description information does not necessarily include all the four of horizontal offset, vertical offset, horizontal size, and vertical size. For example, the video window description information may include only the horizontal offset and the vertical offset. In this case, the size of the display window of the mirror video stream may be a default value or a fixed value. For another example, when a user adjusts, by using a user terminal, only a location of a mirror image (for example, the user touches and holds a screen of the user terminal with a finger and then simply drags within a scope of a display window of a mirror video stream to adjust the location of the mirror image), video window description information may include only a horizontal offset and a vertical offset, but not include a horizontal size or a vertical size. Therefore, when adjusting the display window of the mirror video stream, a video receiving device adjusts only a location of the display window without changing a size of the display window. For another example, when a user adjusts, by using a user terminal, only a size of a mirror image (for example, the user pinches and stretches the image with two fingers within a scope of a display window of a mirror video stream to adjust the size of the mirror image), video window description information may include only a horizontal size and a vertical size, but not include a horizontal offset or a vertical offset. Therefore, when adjusting a secondary picture, a video receiving device adjusts only a size of the display window of the mirror video stream and keeps a location of the display window of the mirror video stream unchanged, for example, keeps the central point (or another reference point) of the display window of the mirror video stream unchanged.

Optionally, as another embodiment, the video window description information may include another parameter, such as a layer parameter, an angle-of-rotation parameter, an aspect ratio parameter, a transparency parameter, a contrast ratio parameter, or a luminance parameter. A case in which the secondary picture in the picture in picture function is used as the display window of the mirror video stream is used as an example. For example, when there are multiple secondary pictures and the multiple secondary pictures may overlap each other, a layer parameter of a specific secondary picture is used to indicate that the specific secondary picture may be overlapped by another secondary picture or may overlap another secondary picture. An angle-of-rotation parameter of the secondary picture may indicate an angle-of-rotation relationship between the image displayed on the screen of the user terminal and the mirror image displayed in the secondary picture, for example, the image displayed on the user terminal may have a 90-degree angle-of-rotation relative to the mirror image; or the user may adjust an angle-of-rotation of the mirror image by rotating the user equipment. The aspect ratio parameter, the transparency parameter, the contrast ratio parameter, and the luminance parameter respectively indicate an aspect ratio, a transparency, a contrast ratio, and a luminance of the secondary picture.

As a specific implementation manner, the video window description information may use a video window descriptor (Video Window Descriptor) in a Miracast protocol. An example of the video window descriptor may include: an 8-bit descriptor_tag, used to identify the video window descriptor; an 8-bit descriptor_length, used to indicate a length of the video window descriptor; a 14-bit horizontal_offset, used to indicate a horizontal offset of the upper left corner of the mirror image; a 14-bit vertical_offset, used to indicate a vertical offset of the upper left corner of the mirror image; and a 4-bit window_priority, used to indicate a layer priority of the mirror image, where a highest priority indicates always being placed on the top layer. Another example of the video window descriptor may further include the horizontal size and the vertical size (for example, in a form of resolution like 640x480 or 1280×720); alternatively or additionally, another example of the video window descriptor may further include another parameter, such as the aspect ratio, the frame frequency, or the scanning mode (for example, an i indicates interlaced scanning, and a p indicates progressive scanning). The foregoing parameters are merely exemplary rather than restrictive. In this embodiment of the present invention, the video window description information may be an existing video window descriptor in the Miracast protocol, or may be obtained by extending an existing video window descriptor. A person skilled in the art may readily design an appropriate parameter form according to a requirement and all variations shall fall within the protection scope of the present invention.

Optionally, as another embodiment, the display controller 63 is further configured to: before determining, according to the video window description information, the location and the size of the secondary picture in the picture in picture function, determine, according to the video window description information, whether the mirror video stream is displayed in full screen; and when determining that the mirror video stream is not displayed in full screen, enable the function of separately display a corresponding video stream in the at least two display windows, for example, enable the picture in picture function.

Optionally, as another embodiment, the first receive port 61 may receive the mirror video stream sent by the user terminal, where the mirror video stream carries the video window description information. Alternatively, the first receive port 61 may receive a control instruction that is corresponding to the mirror video stream and that is sent by the user terminal, where the control instruction carries the video window description information.

Therefore, in this embodiment of the present invention, a mirroring display service can be flexibly implemented, and user experience is enhanced.

FIG. 7 is a block diagram of a user terminal according to an embodiment of the present invention. An example of a user terminal 70 in FIG. 7 is the user terminal 101 in FIG. 1. As shown in FIG. 7, the user terminal 70 includes a controller 71 and a transmitter 72.

The controller 71 is configured to generate video window description information of a mirror video stream. The mirror video stream is a mirror image of an image displayed on a screen of the user terminal 70, and the video window description information is used to indicate information about a first display window of the mirror video stream.

The transmitter 72 is configured to send, by using a WLAN, the video window description information to a video receiving device, so that the video receiving device determines, according to the video window description information, a location and a size of the first display window, where the first display window is one of at least two display windows on the screen of the user terminal, and the at least two display windows are configured to separately display a corresponding video stream.

In this embodiment of the present invention, a multi-window display technology and a mirroring display technology are combined, and a location and a size of a display window of a mirror video stream are determined according to video window description information of the mirror video stream, and the mirror video stream and a video stream from another video source are separately displayed on different display windows. Therefore, a mirroring display service can be flexibly implemented.

That is, in this embodiment of the present invention, the mirror video stream may be used as one video source for a multi-window display service, so as to implement a new multi-window display service.

In addition, in a conventional picture in picture function, a relative relationship (such as a location relationship and a size relationship) between a primary picture and a secondary picture is fixed and cannot be controlled by an external device. When the secondary picture is used as the display window of the mirror video stream, the user terminal in this embodiment of the present invention can control a location and a size of the secondary picture according to the video window description information, thereby enriching performance of a mirroring video service and enhancing user experience.

The user terminal 70 in FIG. 7 may implement various operations or functions related to the user terminal in the embodiments shown in FIG. 1 to FIG. 5, and to avoid repetition, details are not described herein.

Optionally, as an embodiment, the controller 71 may be implemented by a processor or a processing chip, such as a CPU or a GPU. The transmitter 72 may be implemented by a WLAN transmitter.

Optionally, as an embodiment, the video window description information includes at least one of the following parameters: a horizontal offset, a vertical offset, a horizontal size, or a vertical size, where the horizontal offset and the vertical offset are used to indicate a coordinate position that is on the screen and that is of the upper left corner of the display window of the mirror video stream, and the horizontal size and the vertical size are used to respectively indicate a horizontal size and a vertical size of the display window of the mirror video stream.

However, this embodiment of the present invention imposes no limitation on specific content of the video window description information. For example, the horizontal offset and the vertical offset may also be used to indicate a coordinate position that is on the screen and that is of another reference point (such as the upper right corner, the lower left corner, the lower right corner, or the central point) of the display window of the mirror video stream. For another example, the horizontal offset may be a distance relative to the left edge of the screen, or may be a distance relative to the right edge of the screen; the vertical offset may be a distance relative to the upper edge of the screen, or may be a distance relative to the lower edge of the screen. For another example, the horizontal size may be indicated as a length value, a quantity of pixels, or a percentage relative to the horizontal size of the screen (or a horizontal size of another display window, for example, a horizontal size of the foregoing first display window); the vertical size may be indicated as a length value, a quantity of pixels, or a percentage relative to a screen vertical size (or a horizontal size of another display window, for example, a vertical size of the foregoing first display window).

The video window description information does not necessarily include all the four of horizontal offset, vertical offset, horizontal size, and vertical size. For example, the video window description information may include only the horizontal offset and the vertical offset. In this case, the size of the display window of the mirror video stream may be a default value or a fixed value. For another example, when a user adjusts, by using a user terminal, only a location of a mirror image (for example, the user touches and holds a screen of the user terminal with a finger and then simply drags within a scope of a display window of a mirror video stream to adjust the location of the mirror image), video window description information may include only a horizontal offset and a vertical offset, but not include a horizontal size or a vertical size. Therefore, when adjusting the display window of the mirror video stream, a video receiving device adjusts only a location of the display window without changing a size of the display window. For another example, when a user adjusts, by using a user terminal, only a size of a mirror image (for example, the user pinches and stretches the image with two fingers within a scope of a display window of a mirror video stream to adjust the size of the mirror image), video window description information may include only a horizontal size and a vertical size, but not include a horizontal offset or a vertical offset. Therefore, when adjusting a secondary picture, a video receiving device adjusts only a size of the display window of the mirror video stream and keeps a location of the display window of the mirror video stream unchanged, for example, keeps the central point (or another reference point) of the display window of the mirror video stream unchanged.

Optionally, as another embodiment, the video window description information may include another parameter, such as a layer parameter, an angle-of-rotation parameter, an aspect ratio parameter, a transparency parameter, a contrast ratio parameter, or a luminance parameter. A case in which the secondary picture in the picture in picture function is used as the display window of the mirror video stream is used as an example. For example, when there are multiple secondary pictures and the multiple secondary pictures may overlap each other, a layer parameter of a specific secondary picture is used to indicate that the specific secondary picture may be overlapped by another secondary picture or may overlap another secondary picture. An angle-of-rotation parameter of the secondary picture may indicate an angle-of-rotation relationship between the image displayed on the screen of the user terminal and the mirror image displayed in the secondary picture, for example, the image displayed on the user terminal may have a 90-degree angle-of-rotation relative to the mirror image; or the user may adjust an angle-of-rotation of the mirror image by rotating the user equipment. The aspect ratio parameter, the transparency parameter, the contrast ratio parameter, and the luminance parameter respectively indicate an aspect ratio, a transparency, a contrast ratio, and a luminance of the secondary picture.

As a specific implementation manner, the video window description information may use a video window descriptor (Video Window Descriptor) in a Miracast protocol. An example of the video window descriptor may include: an 8-bit descriptor_tag, used to identify the video window descriptor; an 8-bit descriptor_length, used to indicate a length of the video window descriptor; a 14-bit horizontal_offset, used to indicate a horizontal offset of the upper left corner of the mirror image; a 14-bit vertical_offset, used to indicate a vertical offset of the upper left corner of the mirror image; and a 4-bit window_priority, used to indicate a layer priority of the mirror image, where a highest priority indicates always being placed on the top layer. Another example of the video window descriptor may further include the horizontal size and the vertical size (for example, in a form of resolution like 640x480 or 1280×720); alternatively or additionally, another example of the video window descriptor may further include another parameter, such as the aspect ratio, the frame frequency, or the scanning mode (for example, an i indicates interlaced scanning, and a p indicates progressive scanning). The foregoing parameters are merely exemplary rather than restrictive. In this embodiment of the present invention, the video window description information may be an existing video window descriptor in the Miracast protocol, or may be obtained by extending an existing video window descriptor. A person skilled in the art may readily design an appropriate parameter form according to a requirement and all variations shall fall within the protection scope of the present invention.

Optionally, as another embodiment, the transmitter 72 may send the mirror video stream to the video receiving device, where the mirror video stream carries the video window description information. Alternatively, the transmitter 72 may send a control instruction corresponding to the mirror video stream to the video receiving device, where the control instruction carries the video window description information.

Optionally, as another embodiment, the transmitter 72 may send the mirror video stream to the video receiving device by using a wireless local area network.

Optionally, as another embodiment, the user terminal 70 may further include an input device 73, configured to receive operation input of an image displayed on a screen of the user terminal 70 from a user. For example, the input device 73 may be a touchscreen, a keyboard, or a device of another type. A controller 72 may generate the video window description information according to the operation input.

Therefore, in this embodiment of the present invention, a mirroring display service can be flexibly implemented, and user experience is enhanced.

In addition, after the mirroring display service is enabled, the controller 72 may control the screen of the user terminal 70 to stop displaying an image, so as to achieve an effect of power saving. Certainly, the controller 72 may control the screen of the user terminal 70 to continue displaying an image the same as the mirror video stream, or to display another image, such as a message "a mirroring display service has been enabled" for reminding the user, or a control menu, or auxiliary information of another type, which also helps enhance user experience.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An image display method, comprising:
receiving video window description information that is of a mirror video stream and that is sent by a user terminal by using a wireless local area network, wherein the mirror video stream is a mirror image of an image displayed on a screen of the user terminal, and the video window description information is information about a first display window of the mirror video stream;
determining, according to the video window description information, a location and a size of the first display window, wherein the first display window is one of at least two display windows on the screen of the user terminal, the at least two display windows are configured to separately display a corresponding video stream, and the at least two display windows comprise at least the first display window and a second display window; and
displaying the mirror video stream in the first display window, and displaying a video stream from another video source in the second display window, wherein the another video source is different from the user terminal.

2. The image display method according to claim 1, before the determining, according to the video window description information, a location and a size of the first display window, further comprising:
determining, according to the video window description information, whether the mirror video stream is displayed in full screen; and
when determining that the mirror video stream is not displayed in full screen, enabling a function of separately displaying the corresponding video stream in the at least two display windows.

3. The image display method according to claim 1 or 2, wherein the video window description information comprises at least one of the following parameters: a horizontal offset, a vertical offset, a horizontal size, or a vertical size, wherein
the horizontal offset and the vertical offset are used to indicate a coordinate position of the upper left corner of the first display window, and the horizontal size and the vertical size are used to respectively indicate a horizontal size and a vertical size of the first display window.

4. The image display method according to any one of claims 1 to 3, wherein the receiving video window description information that is of a mirror video stream and that is sent by a user terminal by using a wireless local area network comprises:
receiving the mirror video stream that is sent by the user terminal by using the wireless local area network, wherein the mirror video stream carries the video window description information; or
receiving a control instruction that is corresponding to the mirror video stream and that is sent by the user terminal by using the wireless local area network, wherein the control instruction carries the video window description information.

5. An image display method, comprising:
generating video window description information of a mirror video stream, wherein the mirror video stream is a mirror image of an image displayed on a screen of a user terminal, and the video window description information is used to indicate information about a first display window of the mirror video stream; and
sending, by using a wireless local area network, the video window description information to a video receiving device, so that the video receiving device determines, according to the video window description information, a location and a size of the first display window, wherein the first display window is one of at least two display windows on the screen of the user terminal, and the at least two display windows are configured to separately display a corresponding video stream.

6. The image display method according to claim 5, wherein the video window description information comprises at least one of the following parameters: a horizontal offset, a vertical offset, a horizontal size, or a vertical size, wherein
the horizontal offset and the vertical offset are used to indicate a coordinate position of the upper left corner of the first display window, and the horizontal size and the vertical size are used to respectively indicate a horizontal size and a vertical size of the first display window.

7. The image display method according to claim 5 or 6, wherein the sending, by using a wireless local area network, the video window description information to a video receiving device comprises:
sending, by using the wireless local area network, the mirror video stream to the video receiving device, wherein the mirror video stream carries the video window description information; or
sending, by using the wireless local area network, a control instruction corresponding to the mirror video stream to the video receiving device, wherein the control instruction carries the video window description information.

8. The image display method according to any one of claims 5 to 7, wherein the generating video window description information of a mirror video stream comprises:
receiving, from a user, operation input of the image displayed on the screen of the user terminal; and
generating the video window description information according to the operation input.

9. A video receiving device, comprising:
a first receive port, configured to receive video window description information that is of a mirror video stream and that is sent by a user terminal by using a wireless local area network, wherein the mirror video stream is a mirror image of an image displayed on a screen of the user terminal, and the video window description information is used to indicate information about a first display window of the mirror video stream;
a second receive port, configured to receive a video stream from another video source, wherein the another video source is different from the user terminal; and
a display controller, configured to determine, according to the video window description information, a location and a size of the first display window, wherein the first display window is one of at least two display windows on the screen of the user terminal, the at least two display windows are configured to separately display a corresponding video stream, and the at least two display windows comprise at least the first display window and a second display window; wherein
the display controller is further configured to control the first display window to display the mirror video stream, and control the second display window to display the video stream from the another video source.

10. The video receiving device according to claim 9, wherein the display controller is further configured to: before determining, according to the video window description information, a location and a size of the first display window, determine, according to the video window description information, whether the mirror video stream is displayed in full screen; and when determining that the mirror video stream is not displayed in full screen, enable a function of separately displaying the corresponding video stream in the at least two display windows.

11. The video receiving device according to claim 9 or 10, wherein the video window description information comprises at least one of the following parameters: a horizontal offset, a vertical offset, a horizontal size, or a vertical size, wherein
the horizontal offset and the vertical offset are used to indicate a coordinate position of the upper left corner of the first display window, and the horizontal size and the vertical size are used to respectively indicate a horizontal size and a vertical size of the first display window.

12. The video receiving device according to any one of claims 9 to 11, wherein the first receive port is specifically configured to receive the mirror video stream that is sent by the user terminal, wherein the mirror video stream carries the video window description information; or
the first receive port is specifically configured to receive a control instruction that is corresponding to the mirror video stream and that is sent by the user terminal, wherein the control instruction carries the video window description information.

13. A user terminal, comprising:
a controller, configured to generate video window description information of a mirror video stream, wherein the mirror video stream is a mirror image of an image displayed on a screen of a user terminal, and the video window description information is used to indicate information about a first display window of the mirror video stream; and
a transmitter, configured to send the video window description information to a video receiving device by using a wireless local area network, so that the video receiving device determines, according to the video window description information, a location and a size of the first display window, wherein the first display window is one of at least two display windows on the screen of the user terminal, and the at least two display windows are configured to separately display a corresponding video stream.

14. The user terminal according to claim 13, wherein the video window description information comprises at least one of the following parameters: a horizontal offset, a vertical offset, a horizontal size, or a vertical size, wherein
the horizontal offset and the vertical offset are used to indicate a coordinate position of the upper left corner of the first display window, and the horizontal size and the vertical size are used to respectively indicate a horizontal size and a vertical size of the first display window.

15. The user terminal according to claim 13 or 14, wherein the transmitter is specifically configured to send the mirror video stream to the video receiving device, wherein the mirror video stream carries the video window description information; or
the transmitter is specifically configured to send a control instruction corresponding to the mirror video stream to the video receiving device, wherein the control instruction carries the video window description information.

16. The user terminal according to any one of claims 13 to 15, wherein the user terminal further comprises an input device, configured to receive, from a user, operation input of the image displayed on the screen of the user terminal; and
the controller is specifically configured to generate the video window description information according to the operation input.
